# EUROPEAN PATENT SPECIFICATION

(11) **EP 1 844 843 B1**
(45) Date of publication and mention of the grant of the patent: **14.09.2016**
(21) Application number: 07105483.7
(22) Date of filing: 02.04.2007
(51) Int. Cl.: B01D 53/94, B01J 23/63

(54) **USE OF AN EXHAUST GAS PURIFYING CATALYST COMPOSITION CONTAINING ZEOLITE FOR REDUCING HYDROGEN SULFIDE**
VERWENDUNG EINER ABGASREINIGUNGSKATALYSATORZUSAMMENSETZUNG MIT ZEOLITH FÜR DIE REDUKTION VON WASSERSTOFFSULFID
UTILISATION D'UN CATALYSEUR DE PURIFICATION DE GAZ D'ÉCHAPPEMENT CONTENANT DE LA ZÉOLITHE POUR RÉDUIRE LE SULFURE D'HYDROGÈNE

(30) Priority: 10.04.2006 KR 20060032301
(43) Date of publication of application: 17.10.2007
(73) Proprietor: Heesung Engelhard Corporation, Shiheung-city Kyonggi do 429-450 (KR)
(72) Inventor: HAN, Hyun-Sik, 425-870, Ansan-city, Kyungki-do (KR); SONG, Jin-Woo, 429-450, Kyungki-do (KR); HA, Jae-Au, 423-050, Kyungki-do (KR)
(74) Representative: Regimbeau

(56) References cited:
- EP-A1- 0 488 716
- EP-A1- 0 931 590
- EP-A1- 1 201 302
- WO-A-2005/047663
- US-A- 4 760 044
- US-A- 5 677 258

## Description

### BACKGROUND OF THE INVENTION

### 1. Field of the Invention

The present invention relates to an automobile exhaust gas purifying catalyst composition for reducing hydrogen sulfide and, more particularly, to an exhaust gas purifying catalyst composition containing zeolite for reducing hydrogen sulfide, which is a catalyst of a type commonly called a "Three-Way Catalyst (TWC)", and which can remove hydrocarbons (HC), carbon monoxide (CO) and nitrogen oxides (NOₓ) all together, and can control the generation and discharge of hydrogen sulfide, and to a catalyst using the same.

### 2. Description of the Related Art

Nowadays, the environment is seriously polluted due to the increase in automobile exhaust gases. Accordingly, various countries, including European countries, Japan, Korea, North American countries, etc., have established exhaust gas regulations and are enforcing them. Moreover, recently, since environmental pollution is getting more serious day by day, exhaust gas regulations tend to become more strictly. A plurality of catalysts for purifying exhaust gases discharged from internal combustion engines has previously been disclosed and put to practical use. Initially, although oxidation catalysts for removing hydrocarbons (HC) and carbon monoxide (CO) have been put to practical use, now, three-way catalysts for removing nitrogen oxides (NOₓ) together with the hydrocarbons (HC) and carbon monoxide (CO) are commonly being used. These three-way catalysts serve to simultaneously perform the oxidation of hydrocarbons (HC) and carbon monoxide (CO) and the reduction of nitrogen oxides (NOₓ). However, since a very small amount of sulfides is contained in gasoline, the sulfides are oxidized into sulfates (SO_{X}), and the sulfates (SO_{X}) are discharged to the exterior along with the exhaust gases. In the case of purifying these exhaust gases using a three-way catalyst, when exhaust gases discharged from an internal combustion engine are in a reduction condition, sulfates (SO_{X}) included in the exhaust gases are reduced to hydrogen sulfide (H₂S) which is then discharged to the exterior. Since the hydrogen sulfide (H₂S) emits a bad smell, the same as that emitted by rotten eggs, and is harmful to the human body, catalysts, which can control the generation and discharge of hydrogen sulfide (H₂S) and efficiently purify carbon monoxide (CO), hydrocarbons (HC) and nitrogen oxides (NOₓ), are required.

Catalyst compositions for controlling hydrogen sulfide (H₂S) are disclosed in U.S. Patent No. 4,760,044 and G.B. Patent No. 0244127. That is, in these Patent Document, methods of controlling the discharge of hydrogen sulfide (H₂S), in which the generated hydrogen sulfide (H₂S) is captured by a metal easily forming metal sulfides, such as Ni, Co, Cu, Pb, Zn or the like, that is added to a catalyst, by precious metal catalysis, are disclosed. Meanwhile, Korean Examined Patent Application Publication No. 1994-10935, entitled "exhaust gas purifying catalyst for suppressing the generation of hydrogen sulfide", discloses a method of controlling the dispersion degree of precious metal, in which a small amount of active alumina supporting 5 ∼ 30 wt% platinum (Pt) and/or palladium (Pd) and 1 ∼ 20 wt% rhodium (Rh), that is, a total amount thereof of 6 ∼ 50 wt%, is supported with a large amount of active alumina supporting no precious metal, so that the dispersion degree of precious metal becomes low. Owing to this supporting method, the generation of hydrogen sulfide (H₂S) is suppressed and the precious metal is brought into contact with cerium oxide through the active alumina containing no precious metal, so that the reaction between the precious metal and the cerium oxides, resulting in the weakening of a catalytic function, is alleviated, and the main catalytic function for purifying CO, HC and NO_{X} is also improved. The prior art is characterized in that nickel oxides, preferably, nickel (Ni) oxides having specific physical properties, are added.

Nickel (Ni) has been used to control hydrogen sulfide (H₂S) in three-way catalyst with the following functions. That is, in the three-way catalyst including ceria and alumina, sulfur included in fuel is converted into hydrogen sulfide (H₂S). However, when nickel (Ni) is included in the three-way catalyst, the processes of storing and discharging sulfur (S) are opposite to the processes thereof when only ceria and alumina are included therein. Sulfur dioxide (SO₂) generated in a combustion process is stored in ceria and alumina in the form of sulfate at a lean condition, that is, an excess oxygen condition, and is then converted into hydrogen sulfide (H₂S) by reacting with hydrogen (H₂) at a rich condition, that is, a dilute oxygen condition. In this case, the generated hydrogen sulfide (H₂S) is stored in nickel (Ni) at a rich condition and is then discharged into sulfur dioxide (SO₂) at a lean condition. Therefore, nickel (Ni) exhibits an effect of suppressing the discharge of hydrogen sulfide (H₂S).

However, it has been reported that nickel (Ni) oxides for controlling hydrogen sulfide (H₂S) are discharged in the form of Ni Carbonyl, and thus cause cancer or dermatitis. Accordingly, when nickel (Ni) oxides are used to control hydrogen sulfide (H₂S) from automobile exhaust gases, they are exposed to the atmosphere at a ratio of 0.5 mg/cm² per week. For this reason, in Korea and Europe, it is prohibited to use nickel (Ni) in after-treatment systems for automobiles.

As methods of suppressing the discharge of hydrogen sulfide (H₂S) without using nickel (Ni), there are methods of changing an air/fuel ratio and methods of decreasing the surface areas of ceria and alumina, but these methods cannot be easily performed because they are related to automobile performance and exhaust gas purifying performance. Further, there is a method of decreasing the amount of sulfur included in fuel, but this method cannot be easily performed either, because it is associated with gasoline specifications.

US Patent No 5,677,258 discloses a burned gas purifying catalyst with a catalyst construction which prevents lanthanum and barium from sulfur poisoning and/or water poisoning.

EP Patent No 931 590 discloses an improved catalyst containing different kinds of catalytic noble metals, such as Pt and Rh, for catalyzing reduction of NOx which provides an increased thermal stability of each catalytic noble metal.

### SUMMARY OF THE INVENTION

The present inventors found that an exhaust gas purifying catalyst containing zeolite has excellent ability to reduce hydrogen sulfide (H₂S) from exhaust gases, while they have conducted research on zeolite constituting a three-way catalyst by paying attention to the point that zeolite is frequently used in a desulfurizing process, thereby completing the present invention. The present inventors selected zeolite as a material which can maintain or improve the capacity of reducing hydrocarbons (HC), carbon monoxide (CO) and nitrogen oxides (NOₓ), which is a main function of a three-way catalyst, discharged from automobile gasoline engines and other gasoline engines, and has excellent ability to reduce hydrogen sulfide (H₂S). The present invention was completed for the purpose of improving the effect of reducing hydrogen sulfide (H₂S) by including zeolite in a three-way catalyst composition without using nickel (Ni), which is a component whose use in three-way catalysts is prohibited.

Accordingly, the present invention has been made keeping in mind the above problems occurring in the prior art, and an object of the present invention is to provide an exhaust gas purifying catalyst composition containing zeolite for reducing hydrogen sulfide from exhaust gases.

In order to accomplish the above object, the present invention provides an exhaust gas purifying catalyst composition for reducing hydrogen sulfide, including active alumina supporting platinum and/or palladium, and rhodium; a metal selected from the group consisting of Ba, La, Pr and Zr; cerium oxides; and zeolite.

In the catalyst composition, it is preferred that the added zeolite be ZSM-5, mordenite , or zeolite beta powder. Further, the amount of the zeolite is 0.5 ∼ 30 g per ℓ of catalyst, preferably, 1 ∼ 20 g per ℓ of catalyst. Here, the zeolite powder is mixed with slurry of the metal and thus supported in the active alumina. The catalyst composition is applied on a honeycombed support having an insulator structure and supported therein, thereby completing the catalyst.

Platinum and/or palladium are commonly known components for purifying exhaust gases. The source of precious metals used in the present invention includes chloroplatinate (II), dinitramine platinum, platinum-sulfite complex salt, platinum tetramine chloride, palladium chloride, palladium nitrate, palladium-sulfite complex salt, palladium tetramine chloride, rhodium chloride, rhodium nitrate, rhodium sulfate, rhodium-sulfite complex salt, and rhodium-amine complex salt. It is preferred that the amount of the precious metal be 0.1 - 10 g per ℓ of catalyst. It is preferred that active alumina supporting the precious metals have a specific surface area of 5 ∼ 200m²/g. Furthermore, the active alumina supporting the precious metals usefully has a crystal form of γ · δ · θ · α · x · κ or η. Here, the powdered or granulated active alumina is impregnated with the precious metal source solution, dried at a temperature of 100 ∼ 250°C, and then baked in reducing gas such as nitrogen or hydrogen or in air at a temperature of 250 ∼ 500°C for 1-5 hours, thereby preparing the active alumina supporting the precious metals.

In the metal used in the present invention, Ba, Sr, La or Zr is used as a single component or a combination thereof. The amount of this metal is 0.5 - 30 g per ℓ of catalyst, preferably, 0.5 ∼ 20 g per ℓ of catalyst. The metal is impregnated into the active alumina supporting the precious metals in the form of slurry, and is supported therein. Meanwhile, cerium oxide is commonly known as an essential component of a catalyst for purifying automobile exhaust gases. Therefore, the cerium oxide is not a component which is characterized in the present invention. The amount of cerium oxide used to obtain a preferable capacity of purifying CO, HC and NO_{X} is 10 - 150 g per ℓ of catalyst.

The catalyst composition of the present invention is applied on a support. In a honeycombed support having a single structure, it is sufficient to use a so-called "ceramic honeycomb support". Preferable components of the honeycomb support include cordierite, molite, alpha-alumina, zirconia, titania, titanium phosphate, aluminum titanate, pentalite, spodumen, alumino-silicate, magnesium silicate and the like. Among these components, cordierite is more preferably used for internal combustion engines.

In addition, the single structured supports, manufactured using a heat-resistant metal through oxidation method, are made of stainless steel or Fe-Cr-Al alloy. These single structured supports are manufactured through extrusion molding methods or methods of rolling sheet-shaped elements and then hardening them. The shape of gas through-holes (cell shape) thereof may be a hexagon, a quadrangle, a triangle, or a wave shape. The cell density (cell number / unit area) of the support is preferably 150 ∼ 600 cells / inch². The above density is sufficient for use.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a graph showing the desorption temperature of sulfur compounds adsorbed on zeolite powder, measured using a mass spectrograph;
FIG. 2 is a graph showing the extent of discharge of H₂S by sulfur compounds adsorbed on zeolite powder in a rich condition measured using a mass spectrograph;
FIG. 3 is a graph showing the reaction of H₂S gas and SO₂ gas on zeolite powder measured using a mass spectrograph;
FIG. 4 is a graph showing the effect of reducing H₂S based on a three-way catalyst containing no Ni or zeolite, a three-way catalyst containing Ni, and a three-way catalyst containing zeolite, measured using a mass spectrograph; and
FIG. 5 is a graph showing the efficiency of purification of HC, NOₓ and CO based on a three-way catalyst containing no Ni or zeolite, a three-way catalyst containing Ni, and a three-way catalyst containing zeolite, evaluated through a rapid deterioration mode in an engine bench test.

### DESCRIPTION OF THE PREFERRED EMBODIMENTS

Hereinafter, a preferred embodiment of the present invention will be described in detail with reference to the attached drawings.

Hereinafter, a catalyst design process will be described by selecting the above mentioned zeolite as a component of the catalyst composition, but the present invention is not limited thereto.

First, the present inventor sought to determine whether the effect of discharging SO₂, not H₂S, which meets the needs of the present invention, could be obtained when sulfur compounds are adsorbed on zeolite and then desorbed therefrom.

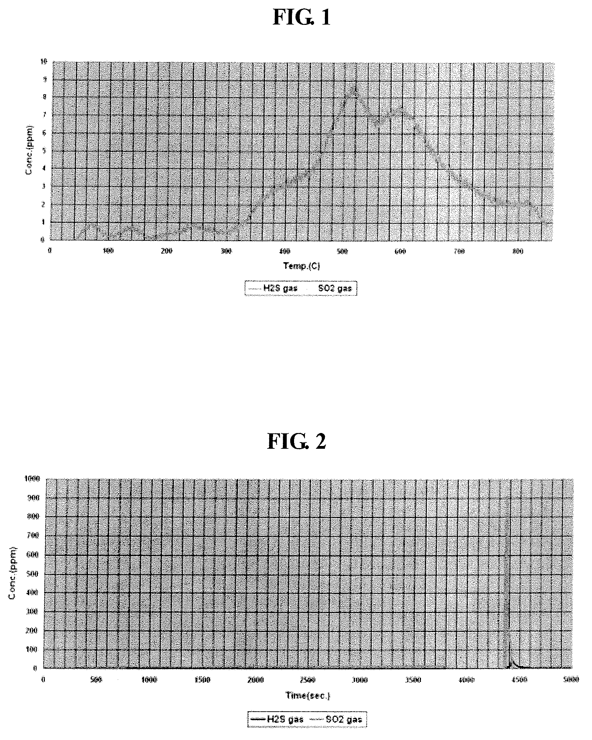

FIG. 1 shows the desorption temperature of sulfur compounds adsorbed on zeolite powder measured using a mass spectrograph. 0.5 g of zeolite powder, exposed to sulfur by injecting 20ppm of H₂S gas and 50ppm of SO₂ gas at respective rates of 500ml and 100ml per minute for 5 minutes, was put into a quartz tube, and was then heated to a temperature of 850°C while injecting N₂ gas at a rate of 100ml per minute, thereby measuring the desorption temperature of the sulfur compound. As a result, among the sulfur compounds, H₂S gas was not generated, and SO₂ gas started to be desorbed at a temperature of about 300°C, and was maximally desorbed at a temperature of 520°C. Accordingly, it was found that the sulfur compounds adsorbed on zeolite were discharged into SO₂ gas rather than H₂S gas at the time of raising a temperature.

Further, the present inventor measured the extent of discharge of H₂S in a rich condition, which is shown in FIG. 2.

FIG. 2 shows the extent of discharge of H₂S in a rich condition measured using a mass spectrograph by injecting SO₂ gas at a temperature of 500°C for 30 minutes in order to adsorb sulfate on zeolite powder, purging the zeolite powder having sulfate adsorbed thereon using N2 gas for 10 minutes, and then injecting H2 gas thereto. As a result, even in a rich condition, that is, a dilute oxygen condition, in which sulfur compounds are discharged into H₂S, the discharge amount of H₂S gas was about 30ppm, less than that of SO₂ gas, and thus the extent of discharge of H₂S was slight. Accordingly, it can be seen that, when zeolite powder is used, a very small amount of the adsorbed SO₂ is converted into H₂S in a rich condition.

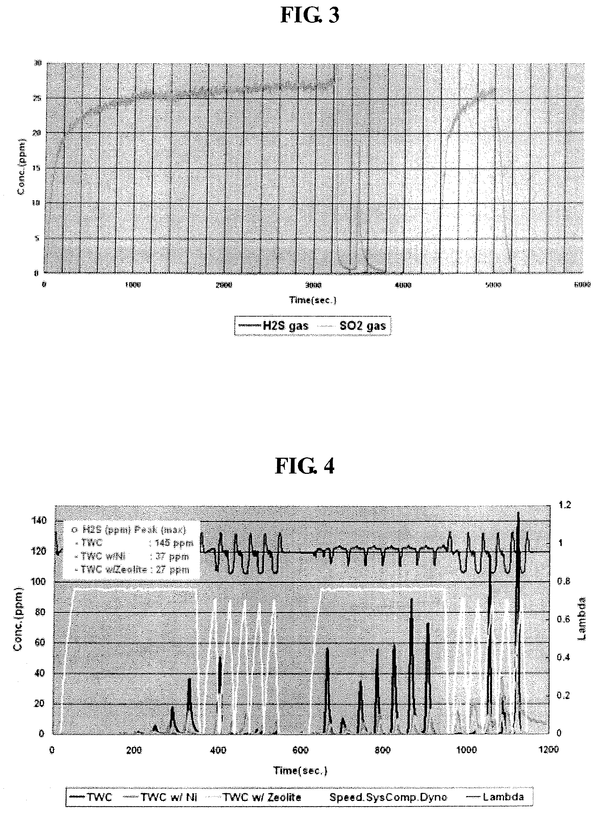

Meanwhile, FIG. 3 shows the reaction of H₂S gas and SO₂ gas on zeolite powder measured using a mass spectrograph. An experiment on the above reaction was performed by putting 0.5g of pure zeolite powder in a quartz tube and injecting 20ppm of H₂S gas at a rate of 500ml per minute, 100ppm of SO₂ gas at a rate of 100ml per minute and N₂ gas at a rate of 100ml per minute, at a temperature of 500°C. In the above experiment, in a time range of 0 - 3200 sec, H₂S, SO₂ and N₂ gas were injected in the above condition at a temperature of 500°C, and, in a time range of 3200 ∼ 4400 sec, O2 and N₂ gas were injected. Further, in a time range of 4400 ∼ 5000 sec, H₂S, SO₂ and N₂ gas were injected in the same condition as during the time range of 0 ∼ 3200 sec at a temperature of 500°C, and, in a time range of 5000 sec or more, the quartz tube was rapidly cooled from a temperature of 500°C, while injecting H₂S, SO₂ and N2 gas, as the result of the above experiment, H₂S and SO₂ gas, which are reactant gases, were not detected. In conclusion, in the reaction of H₂S gas and SO₂ gas on zeolite powder, it was determined that both H₂S gas and SO₂ gas were discharged into SO₂ gas through the reaction at a temperature of 500°C, and sulfur compounds were adsorbed on zeolite at low temperatures.

Based on the above results, the present inventor measured the effect of reducing H₂S according to a three-way catalyst containing no Ni and zeolite, a three-way catalyst containing Ni and a three-way catalyst containing zeolite, using a mass spectrograph, and showed this in FIG. 4. The three-way catalyst is a catalyst including a honeycombed support, having an insulator structure, coated thereon with the catalyst composition including active alumina supporting palladium and rhodium; metals such as Ba, La, Pr and Zr; and cerium oxides. The Ni-containing three-way catalyst is a catalyst containing Ni at a ratio of 7g per ℓ of catalyst. The zeolite-containing three-way catalyst according to the present invention is a catalyst containing ZSM-5 powder at a ratio of 10g per ℓ of catalyst. In FIG. 4, as the result of experimentation on the discharge amount of H₂S in an H₂S test mode in consideration of the air/fuel (A/F) ratio in a real car, using a mass spectrograph, the discharge amount of H₂S in the zeolite-containing three-way catalyst was 27ppm, which was the lowest measurement value. Accordingly, the three-way catalyst according to the present invention exhibits a better effect of reducing H₂S.

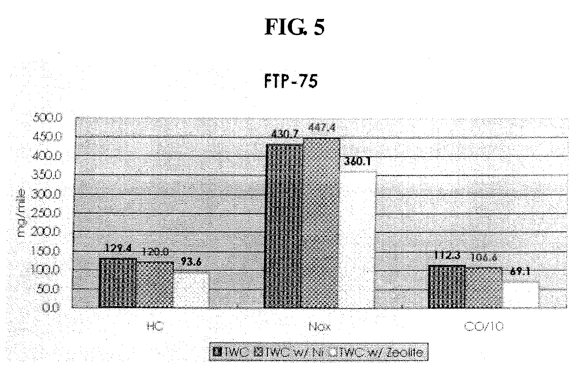

Based on the determination that it is difficult to apply zeolite to a three-way catalyst if the capacity of purifying exhaust gases is decreased, even if the discharge of H₂S can be suppressed, by applying the zeolite to the three-way catalyst, the performances of the zeolite-containing three-way catalyst, the Ni-containing three-way catalyst, and the three-way catalyst containing no Ni or zeolite were evaluated in an engine bench test through a rapid deterioration mode. The rapid deterioration mode was performed for 50 hours by setting the maximum temperature in the catalyst to 900°C. The three-way catalyst, deteriorated in this mode, corresponds to the catalyst of a real car having traveled 80,000 km. The rapidly deteriorated three-way catalyst was mounted in a 2.0L vehicle, and was then tested in FTP-75 mode, which is an exhaust qualification test mode in U.S.A and Korea. The test results were shown in FIG. 5. As shown in FIG. 5, it was found that the zeolite-containing three-way catalyst according to the present invention exhibits better effect of purifying HC, CO and NOx than the Ni-containing three-way catalyst.

As described above, the present invention provides a Ni-free three-way catalyst which can suppress the discharge of H₂S, which causes discomfort, without using Ni, which is harmful to the human body, and which can improve the capacity of purifying exhaust gases at a ratio of 2.9% by adding zeolite in substitute for Ni.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. Use of zeolite powders in an exhaust gas purifying catalyst composition for reducing H₂S when an exhaust gas is contacted with the exhaust gas purifying catalyst, wherein the exhaust gas purifying catalyst composition comprises active alumina, supporting rhodium together with one or both metal(s) selected from the group consisting of platinum and palladium; an additional metal selected from the group consisting of Ba, La, Pr and Zr; cerium oxides; and zeolite powders.

2. Use according to claim 1, wherein the zeolite is ZSM-5, mordenite or zeolite beta powder.

3. Use according to claim 1 or 2, wherein an amount of the zeolite is 0.5 ∼ 30 g per ℓ of catalyst.

## Patentansprüche

1. Verwendung von Zeolitpulver in einer Abgasreinigungskatalysatorzusammensetzung für die Reduktion von Wasserstoffsulfid, wenn ein Abgas mit dem Abgasreinigungskatalysator kontaktiert wird, wobei die Abgasreinigungskatalysatorzusammensetzung aktives Aluminiumoxid umfasst, unterstützend Rhodium zusammen mit einem oder beiden Metall(en), das / die ausgewählt ist / sind aus der Gruppe bestehend aus Platin und Palladium; einem zusätzlichen Metall, das ausgewählt ist aus der Gruppe bestehend aus Ba, La, Pr und Zr; Ceriumoxiden; und Zeolithpulvern.

2. Verwendung gemäß Anspruch 1, wobei das Zeolit ZSM-5, Mordenit oder Zeolit-Betapulver ist.

3. Verwendung gemäß Anspruch 1 oder 2, wobei eine Menge des Zeolits 0,5 ∼ 30 g pro Liter Katalysator ist.

## Revendications

1. Utilisation de poudres de zéolite dans une composition de catalyseur de purification de gaz d'échappement pour réduire le H₂S quand un gaz d'échappement est mis en contact avec le catalyseur de purification de gaz d'échappement, dans laquelle la composition de catalyseur de purification de gaz d'échappement comprend de l'alumine active, supportant du rhodium avec l'un ou les deux métaux sélectionnés dans le groupe constitué de platine et de palladium ; un métal supplémentaire sélectionné dans le groupe constitué de Ba, La, Pr et Zr ; des oxydes de cérium ; et des poudres de zéolite.

2. Utilisation selon la revendication 1, dans laquelle la zéolite est de la ZSM-5, de la mordénite ou de la poudre zéolite beta.

3. Utilisation selon la revendication 1 ou 2, dans laquelle une quantité de la zéolite est de 0,5 ∼ 30 g par l de catalyseur.
